# EUROPÄISCHE PATENTANMELDUNG

(11) **EP 1 046 553 A1**
(43) Veröffentlichungstag der Anmeldung: **25.10.2000**
(21) Anmeldenummer: 00106429.4
(22) Anmeldetag: 24.03.2000
(51) Int. Cl.: B60R 21/32

(54) **Airbagvorrichtung für ein Fahrzeug**

(30) Priorität: 22.04.1999 DE 19918235
(71) Anmelder: DaimlerChrysler AG, 70567 Stuttgart (DE)
(72) Erfinder: Henkel, Jörg, 73033 Göppingen (DE); Müller, Manfred, 73779 Deizisau (DE); Rudolf, Harald, 72072 Tübingen (DE)

(57) **Zusammenfassung**

Ein Airbagmodul (1a) für ein Kraftfahrzeug mit einem Modulgehäuse (2), in dem ein Gasgenerator vorgesehen ist, der mit wenigstens zwei unabhängig voneinander zündbaren Treibsatzstufen versehen ist, ist bekannt.

Erfindungsgemäß ist den Treibsatzstufen wenigstens ein Anzeigemittel (5 bis 14) zugeordnet, das abhängig von einer Zündung wenigstens einer Treibsatzstufe unterschiedliche visuell erkennbare Zustände einnimmt, die einen gezündeten oder einen ungezündeten Zustand der wenigstens einen Treibsatzstufe definieren.

Einsatz für Personenkraftwagen.

## Beschreibung

Die Erfindung betrifft eine Airbagvorrichtung für ein Kraftfahrzeug mit einem Modulgehäuse, in dem ein Gasgenerator vorgesehen ist, der mit wenigstens zwei unabhängig voneinander zündbaren Treibsatzstufen versehen ist.

Eine solche Airbagvorrichtung ist für einen Beifahrersitz eines Personenkraftwagens allgemein bekannt. Die Airbagvorrichtung ist in einer Armaturentafel des Personenkraftwagens vor dem Beifahrersitz integriert. Die Airbagvorrichtung weist ein Modulgehäuse auf, mittels dessen das gesamte Airbagmodul vormontierbar und als vormontierte Einheit in das Fahrzeug einsetzbar ist. In dem Modulgehäuse ist ein Gasgenerator vorgesehen, der mit mehreren, unabhängig voneinander zündbaren Treibsatzstufen versehen ist. Solche Airbagmodule werden nach einer Kollision des Personenkraftwagens entfernt und durch ein neues Airbagmodul ersetzt. Das alte Airbagmodul sollte umweltgerecht entsorgt werden, was häufig mit Schwierigkeiten verbunden sein kann.

Aufgabe der Erfindung ist es, ein Airbagmodul der eingangs genannten Art zu schaffen, das eine einfache umweltgerechte Entsorgung ermöglicht.

Diese Aufgabe wird dadurch gelöst, daß den Treibsatzstufen wenigstens ein Anzeigemittel zugeordnet ist, das abhängig von einer Zündung wenigstens einer Treibsatzstufe unterschiedliche, von außen visuell erkennbare Zustände einnimmt, die einen gezündeten oder einen ungezündeten Zustand der wenigstens einen Treibsatzstufe definieren. Die Erfindung geht von der Erkenntnis aus, daß Schwierigkeiten bei der umweitgerechten Entsorgung darauf zurückzuführen waren, daß nicht ohne weiteres erkennbar war, ob eine oder mehrere Treibsatzstufen bei der Expansion des entsprechenden Airbags gezündet worden waren. Durch die erfindungsgemäße Lösung kann nunmehr direkt am Airbagmodul erfaßt werden, wie viele Treibsatzstufen gezündet haben. Es wird somit eine gezielte und einfache Entsorgung ermöglicht, ohne daß aufwendige Zusatzarbeiten wie Widerstandsmessungen oder ähnliches durchgeführt werden müssen.

In Ausgestaltung der Erfindung ist das wenigstens eine Anzeigemittel als temperaturempfindliches Anzeigeelement gestaltet, das im Bereich jeder Treibsatzstufe derart angebracht ist, daß es temperaturabhängig bei einer Zündung der jeweiligen Treibsatzstufe sein äußeres Erscheinungsbild, insbesondere seine Farbe oder Farbschattierung, ändert. Je nach Gestaltung der temperaturempfindlichen Anzeigeelemente kann ein einzelnes Anzeigeelement für alle Treibsatzstufen vorgesehen sein, das sich über die Gesamtlänge aller mit den jeweiligen Treibsatzstufen versehenen Kammern des Gasgenerators erstreckt. Alternativ ist jeder Treibsatzstufe ein eigenes Anzeigeelement zugeordnet. Da bei der Zündung jeder Treibsatzstufe eine hohe Temperatur entsteht, die das Gehäuse des Gasgenerators und damit auch das Gehäuse des Airbagmoduls erhitzt, kann relativ sicher erfaßt werden, wie viele Treibsatzstufen gezündet hatten.

In weiterer Ausgestaltung der Erfindung ist als temperaturempfindliches Anzeigeelement ein auf das Gehäuse des Gasgenerators oder auf das Modulgehäuse aufgebrachter Sensorfolienabschnitt vorgesehen. Der Folienabschnitt kann als über die gesamte Länge des Gasgenerators durchgehender Folienstreifen gebildet sein oder auch aus mehreren, der Anzahl der Treibsatzstufen entsprechenden Folienabschnitten bestehen, die jeweils auf Höhe der die jeweilige Treibsatzstufe enthaltenden Kammer des Gasgenerators positioniert sind. Der wenigstens eine Folienabschnitt ist außenseitig auf der Wandung des Gasgenerators oder des Modulgehäuses aufgebracht und entsprechend temperaturempfindlich gestaltet, so daß er sein Erscheinungsbild temperaturabhängig ändert.

In weiterer Ausgestaltung der Erfindung ist als temperaturempfindliches Anzeigeelement ein in einer Zündeinheit jeder Treibsatzstufe integrierter Kunststoffeinsatz vorgesehen. Der Kunststoffeinsatz weist noch weitere Funktionen auf, da er zur Isolation sowie gegebenenfalls zur Aufnahme einer Kurzschlußbrücke dienen kann. Eine Farbveränderung des Kunststoffeinsatzes oder eine anders gestaltete Änderung des äußeren Erscheinungsbildes des Kunststoffeinsatzes wie insbesondere ein Anschmelzen ermöglichen eine sehr differenzierte Anzeige der Zündung oder Nichtzündung einer Treibsatzstufe, zumal diese Kunststoffeinsätze direkt im Zentrum der Zündung positioniert sind.

In weiterer Ausgestaltung der Erfindung weist das wenigstens eine Anzeigemittel eine in den Stromkreis der Zündeinheit jeder Treibsatzstufe integrierte Schmelzsicherung auf, die von außen erkennbar ist. Diese Schmelzsicherung wird zusammen mit der Zündung der jeweiligen Treibsatzstufe oder mit der nach der Zündung noch zur Verfügung stehenden Energie angesteuert.

In weiterer Ausgestaltung der Erfindung ist das wenigstens eine Anzeigemittel als druckempfindliches Anzeigeelement gestaltet, das im Bereich einer von außen sichtbaren Drucköffnung des Modulgehäuses oder des Gasgenerators positioniert ist. Diese Anzeige macht Gebrauch von dem Druckaufbau innerhalb der entsprechenden Kammern des Gasgenerators bei der Zündung jeder Treibsatzstufe.

In weiterer Ausgestaltung der Erfindung ist das druckempfindliche Anzeigeelement als die Drucköffnung varschließende Membran gestaltet, die bei einer Zündung der jeweiligen Treibsatzstufe zerstört wird. Abhängig davon, ob die Drucköffnung noch verschlossen oder freigesetzt ist, kann bei der Entsorgung des Airbagmoduls erfaßt werden, ob die jeweilige Treibsatzstufe gezündet hatte.

Wenigstens eine Drucköffnung, die mit einem druckempfindlichen Anzeigeelement versehen ist, kann auch direkt in einer Wandung des Modulgehäuses vorgesehen sein. Der Druckaufbau innerhalb des Modulgehäuses, der zur Expansion des Airbags führt, steigt mit der Anzahl der gezündeten Treibsatzstufen an. Durch den Einsatz von Drucköffnungen mit unterschiedlich großen Querschnitten, die durch entsprechende Membranen - vorzugsweise durch Klebefolien verschlossen sind, kann nach der Zündung des Airbagmoduls festgestellt werden, wie hoch der Druckaufbau innerhalb des Modulgehäuses war, in dem die entsprechend freigesetzten Drucköffnungen erfaßt werden. Die Anzahl der Drucköffnungen und ihrer freien Querschnitte ist derart auf die Druckunterschiede bei der jeweiligen Zündung der verschiedenen Treibsatzstufen sowie auf den maximalen Druckaufbau bei Zündung aller Treibsatzstufen abgestimmt, daß eine sichere Beurteilung erfolgen kann, wie viele Treibsatzstufen gezündet worden sind.

In weiterer Ausgestaltung der Erfindung ist in der Drucköffnung als druckempfindliches Anzeigeelement ein mit einem nach außen abragenden Stift versehenes, linearbewegliches Kolbenelement gelagert. Bei einem entsprechenden Druckaufbau wird der Stift nach außen gedrückt, so daß von außen her visuell erkannt werden kann, wie viele Treibsatzstufen gezündet worden sind. Falls ein entsprechendes, mit einem Stift versehenes Kolbenelement direkt im Bereich der Kammer jeder Treibsatzstufe des Gasgenerators vorgesehen ist, so kann äußerst zuverlässig beurteilt werden, welche Treibsatzstufe gezündet hat und welche nicht.

Weitere Vorteile und Merkmale der Erfindung ergeben sich aus den Ansprüchen sowie aus der nachfolgenden Beschreibung von bevorzugten Ausführungabeispielen der Erfindung, die anhand der Zeichnungen dargestellt sind.
- Fig. 1: zeigt perspektivisch eine erste Ausführungsform eines erfindungsgemäßen Airbagmodules mit mehreren, durch einen Klebestreifen verschlossenen Drucköffnungen im Modulgehäuse,
- Fig. 2: ein weiteres Airbagmodul ähnlich Fig. 1, bei dem im Modulgehäuse zwei durch Kolbenelemente verschlossene Drucköffnungen vorgesehen sind,
- Fig. 3: in vergrößerter Schnittdarstellung einen Ausschnitt III-III des Airbagmoduls nach Fig. 2,
- Fig. 4: den Ausschnitt nach Fig. 3, wobei das Kolbenelement sich in einer den gezündeten Zustand anzeigenden Position befindet, und
- Fig. 5: in perspektivischer Darstellung eine weitere Ausführungsform eines erfindungsgemäßen Airbagmoduls mit einem temperaturempfindlichen Anzeigeelement.

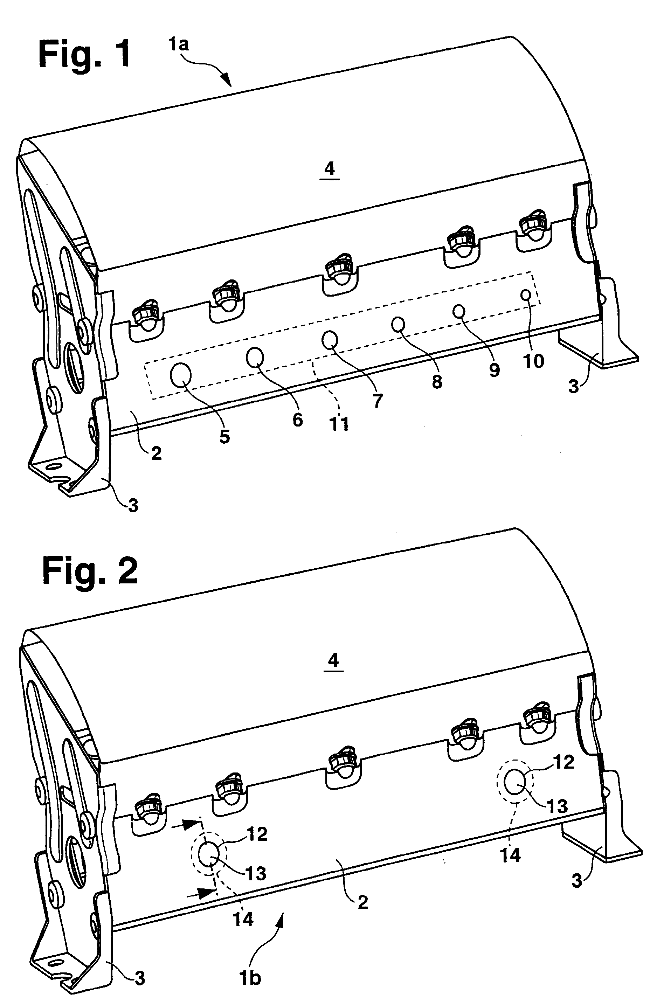

Airbagmodule für die Beifahrerseite von Personenkraftwagen, die in einer Armaturentafel integriert sind, sind grundsätzlich bekannt. Die nachfolgend näher beschriebenen Airbagmodule nach den Fig. 1 bis 5 entsprechen vom grundsätzlichen Aufbau her den bekannten Airbagmodulen, so daß an dieser Stelle keine nähere Erläuterung von Aufbau und Funktion der Airbagmodule 1a bis 1c notwendig ist. Erfindungsgemäß ist jedoch jedes Airbagmodul 1a bis 1c nach den Fig. 1 bis 5 mit Anzeigemitteln 5 bis 15 versehen, die von außen erkennen lassen, ob und wie viele Treibsatzstufen des Airbagmoduls 1a bis 1c gezündet worden sind. Alle Airbagmodule 1a bis 1c nach den Fig. 1 bis 5 weisen einen mit wenigstens zwei Treibsatzstufen versehenen und somit mehrstufigen Gasgenerator auf, der in einem Modulgehäuse 2 des jeweiligen Airbagmoduls 1a bis 1c integriert ist. Die nach den Fig. 1 bis 5 dargestellten Airbagmodule 1a bis 1c weisen zweistufige Gasgeneratoren auf. Das Modulgehäuse 2 ist mit Halterungen 3 versehen, die Seitenflanken des Modulgehäuses 2 darstellen und die zur Halterung des Airbagmoduls 1a bis 1c im Fahrzeug dienen. Jede Treibsatzstufe ist innerhalb des Gasgeneratos in grundsätzlich bekannter Weise mit einer eigenen Expansionskammer versehen. Die Zündeinheit für jede Treibsatzstufe befindet, sich jeweils stirnseitig des Gasgenerators und somit auf gegenüberliegenden Stirnseiten des Modulgehäuses 2 im Bereich jeder Seitenwange 3. Jedes Airbagmodul 1a bis 1c ist nach oben durch eine Abdeckung 4 überdeckt, die im Expansionstall aufreißt.

Um beim Airbagmodul 1a nach Fig. 1 erkennen zu können, ob lediglich eine oder beide Treibsatzstufen im Kollisionsfall gezündet worden waren, sind als Anzeigemittel insgesamt sechs unterschiedlich große Drucköffnungen 5 bis 10 im Modulgehäuse 2 vorgesehen, die über die Länge des Modulgehäuses 2 verteilt angeordnet sind. Die Drucköffnungen 5 bis 10 sind Teil von druckempfindlichen Anzeigeelementen. Die Drucköffnungen 5 bis 10 sind in einer Wandung des Modulgehäuses 2 vorgesehen und von außen sichtbar. Innenseitig sind die Drucköffnungen 5 bis 10 durch einen Klebestreifen 11 verschlossen, der im Bereich jeder Drucköffnung 5 bis 10 als Membran dient. Der Klebestreifen 11 erstreckt sich über alle Drucköffnungen 5 bis 10. Die Drucköffnungen 5 bis 10 in Verbindung mit dem als Membran dienenden Klebestreifen 11 sind derart ausgelegt, daß bei Zündung der ersten Treibsatzstufe lediglich die größeren der in ihrem Durchmesser gleichmäßig abgestuften Drucköffnungen 5 bis 10 freigesetzt werden, indem der Klebestreifen 11 im Bereich dieser Drucköffnungen 5 bis 7 aufreißt. Bei Zündung der zweiten Treibsatzstufe führt der entsprechend erhöhte Druck im Inneren des Modulgehäuses 2 auch zum Aufreißen der noch verschlossenen Drucköffnungen 5 bis 10, so daß in einfacher Weise bei der Entsorgung des Airbagmoduls 1a von außen erkannt werden kann, ob eine oder beide Treibsatzstufen gezündet worden waren.

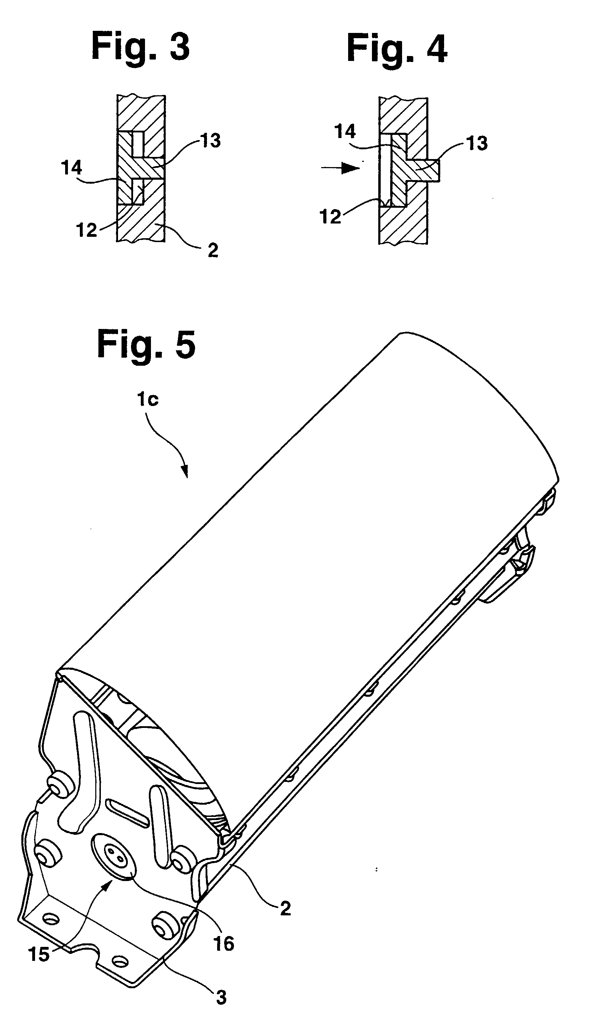

Beim Ausführungsbeispiel nach Fig. 2 sind im Modulgehäuse 2 zwei gleichgroße Drucköffnungen 12 vorgesehen, die durch jeweils ein Kolbenelement 14 verschlossen sind. Das Kolbenelement 14 ist in einem entsprechenden zylindrischen Abschnitt der Drucköffnung 12 linearbeweglich verschiebbar. Von dem Kolbenelement 14 ragt ein Anzeigestift 13 nach außen ab, der durch eine korrespondierende zylindrische Bohrung der Drucköffnung 12 hindurchragt. In ungezündetem Ruhezustand schließt die äußere Stirnseite des Anzeigestiftes 13 bündig mit der Außenseite der Wandung des Modulgehäuses 2 ab. Bei einem entsprechenden Druckaufbau innerhalb des Modulgehäuses 2 durch eine Zündung von wenigstens einer Treibsatzstufe wird das Kolbenelement 14 in Pfeilrichtung (Fig. 4) nach außen gedrückt, wodurch der Anzeigestift 13 teilweise über die Außenseite der Wandung des Modulgehäuses 2 nach außen abragt. Beim späteren Entsorgen des Airbagmodules 1b ist somit in einfacher Weise erkennbar, ob die entsprechende Treibsatzstufe gezündet worden ist oder nicht. Anstatt der dargestellten Integration eines mit einem Anzeigestift 13 versehenen Kolbenelementes 14 in eine Wandung des Modulgehäuses kann dieses Kolbenelement auch direkt in die Wandung des Gehäuses des Gasgenerators integriert sein. Dabei ist vorzugsweise jeweils ein Kolbenelement der Kammer jeder Treibsatzstufe zugeordnet. Der Anzeigestift ragt derart nach außen ab, daß er von der Außenseite des Airbagmoduls her erkennbar ist. Hierzu kann es notwendig sein, daß der Anzeigestift zusätzlich zum Hindurchragen durch die Wandung der entsprechenden Kammer des Gasgenerators auch noch durch eine entsprechende Wandung des Modulgehäuses nach außen hindurchragt. Ein gewisser Reibschluß zwischen Drucköffnung 12 und Kolbenelement 14 bzw. Anzeigestift 13 gewährleistet, daß das Kolbenelement 14 in der nach außen gedrückten Position geklemmt ist, so daß das Kolbenelement nicht wieder in die Ruheposition zurückgleiten kann. Beim Ausführungsbeispiel nach Fig. 2 bis 4 ist das Modulgehäuse 2 derart gestaltet, daß räumliche Trennungen des Druckaufbaus aufgrund der ersten Treibsatzstufe sowie aufgrund der zweiten Treibsatzstufe vorhanden sind, so daß das in Fig. 2 linke Kolbenelement 14 der einen Treibsatzstufe und das in Fig. 2 rechte Kolbenelement 14 der anderen Treibsatzstufe zugeordnet sind.

Beim Ausführungsbeispiel nach Fig. 5 sind als temperaturempfindliche Anzeigeelemente für die beiden Treibsatzstufen des Gasgenerators des Airbagmodules 1c im Bereich der gegenüberliegenden, stirnseitigen Zündeinheiten 15 Kunststoffeinsätze 16 vorgesehen, die ihr äußeres Erscheinungsbild, insbesondere ihre Farbe oder Farbschattierung, abhängig von dem im Bereich der Zündeinheit jeweils entstehenden Temperatur ändern. Bei der durch die Zündung entstehenden starken Temperaturerhöhung wird somit das Erscheinungsbild des Kunststoffeinsatzes 16, der zusätzlich zur Isolierung sowie zur Aufnahme einer Kurzschlußbrücke dient, so verändert, daß diese Veränderung von außen erkennbar ist. Es kann somit durch einfache visuelle Prüfung erkannt werden, ob die jeweilige Treibsatzstufe gezündet worden ist oder nicht, so daß eine einfache, umweltgerechte Entsorgung des Airbagmoduls 1c nach einer Kollision gewährleistet ist.

## Patentansprüche

1. Airbagmodul für ein Kraftfahrzeug mit einem Modulgehäuse, in dem ein Gasgenerator vorgesehen ist, der mit wenigstens zwei unabhängig voneinander zündbaren Treibsatzstufen versehen ist, wobei den Treibsatzstufen wenigstens ein Anzeigemittel zugeordnet ist, das abhängig von einer Zündung wenigstens einer Treibsatzstufe unterschiedliche, von außen visuell erkennbare Zustände einnimmt, die einen gezündeten oder einen ungezündeten Zustand der wenigstens einen Treibsatzstufe definieren,
**dadurch gekennzeichnet, dass**
als Anzeigemittel wenigstens ein druckempfindliches Anzeigeelement (5 bis 14) vorgesehen ist, das im Bereich mehrerer von außen sichtbarer Drucköffnungen (5 bis 10) des Modulgehäuses (2) oder des Gasgenerators positioniert ist, wobei die Drucköffnungen (5 bis 10) unterschiedlich große freie Querschnitte aufweisen.

2. Airbagmodul nach Anspruch 1,
**dadurch gekennzeichnet, dass**
das wenigstens eine druckempfindliche Anzeigeelement wenigstens eine die Drucköffnungen (5 bis 10) verschließende Membran (11) aufweist, die bei einer Zündung der jeweiligen Treibsatzstufe zerstört wird.

3. Airbagmodul nach Anspruch 1,
**dadurch gekennzeichnet, dass**
in wenigstens einer Drucköffnung (12) als druckempfindliches Anzeigeelement jeweils ein mit einem nach außen abragenden Anzeigestift (13) versehenes, linearbewegliches Kolbenelement (14) gelagert ist.
